# EUROPÄISCHE PATENTSCHRIFT

(11) **EP 3 587 025 B1**
(45) Veröffentlichungstag und Bekanntmachung des Hinweises auf die Patenterteilung: **15.03.2023**
(21) Anmeldenummer: 19178894.2
(22) Anmeldetag: 07.06.2019
(51) Int. Cl.: B23P 19/00, B21J 15/32

(54) **KOMPAKTVEREINZELER**
COMPACT SEPARATOR
DISPOSITIF DE SÉPARATION COMPACT

(30) Priorität: 27.06.2018 DE 102018210472
(43) Veröffentlichungstag der Anmeldung: 01.01.2020
(73) Patentinhaber: Audi AG, 85045 Ingolstadt (DE)
(72) Erfinder: HORNBOSTEL, Norbert, 74388 Talheim (DE); EBINGER, Hannes, 74189 Weinsberg (DE)

(56) Entgegenhaltungen:
- DE-A1-102005 006 795
- DE-A1-102005 015 032
- DE-A1-102011 113 832
- DE-A1-102016 124 694
- JP-A- H0 631 660
- JP-A- H0 825 156
- JP-A- 2016 055 388

## Beschreibung

Die Erfindung betrifft eine an einem Fügeroboter angeordnete kompakte Vorrichtung zur Bevorratung und Vereinzelung von Fügeelementen nach dem Oberbegriff des Anspruchs 1 und ein Verfahren zum Betreiben der Vorrichtung. Eine solche Vorrichtung ist aus der DE 10 2016 124694 A1 bekannt.

Aktuell sind industrielle Fügesysteme bekannt, bei denen geordnete, d. h. nacheinander oder übereinander aufgereihte Fügeelememente über eine Kupplung zwischen einer Betankungsstation und der verarbeitenden Fügezange ausgetauscht werden. Bei dieser Art der Übergabe muss eine sehr genaue Verbindung zwischen Betankungsstation und Fügezange geschaffen werden. Hierzu werden häufig Zuführschläuche eingesetzt, die im Hinblick auf Toleranzen schwierig zu fertigen sind (Profilschläuche) und eine Herausforderung für jede Serienfertigung darstellen. Die Transportstrecke der Fügeelemente muss häufig auf <20m begrenzt werden, weil eine geeignete Drucklufteinstellung nicht mehr möglich ist. Weiterhin wird heute sehr viel Druckluftenergie benötigt. Häufig werden Luftleckagen durch komplexe Übergänge an den Profilschlauch-Geometrien beobachtet.

Es wurde bereits ein System vorgeschlagen, in dem die Übergabe der Fügeelemente mit einer einfachen, z. B. trichterförmigen Übergabe erfolgen kann. Der Betankungsvorgang kann hierbei deutlich schneller vorgenommen werden, weil ungeordnete Fügeelemente in größerer Anzahl an der Schnittstelle übergeben werden. Für die Automatisierung können Füllstände und Fehlerquellen (wie z. B. Verstopfungen) durch Sensoren mit der Anlagensteuerung abgefragt werden. Es ergibt sich weiterhin der Vorteil, dass sehr einfach zu fertigende Zuführschläuche, z. B. handelsübliche Rundschläuche verwendet werden können.

Die Fügeelemente, die in einem Zwischenbunker ungeordnet vorliegen, werden in einer automatisierten Roboterfertigung einer Vorrichtung zur Bevorratung und Vereinzelung der Fügeelemente an einem beweglichen Roboter oder einer beweglichen Fügezange übergeben. Hierbei werden die Fügeelemente von einer Befüllstation außerhalb des Schutzkreises ungeordnet in den Schutzkreis, nahe des Roboters in einen Zwischenbunker transportiert oder direkt von der Befüllstation außerhalb des Schutzkreises in die Vorrichtung zur Bevorratung und Vereinzelung am Roboter bzw. der Fügezange zugeführt.

Als Vereinzelungseinrichtung werden Systeme eingesetzt, die Fügeelemente, insbesondere Stanzniete, ausrichten und vereinzeln können. Das sind z. B. Zentrifugalvereinzeler oder Trommelvereinzeler, Linear-, Schwing-, Stufen- oder Wendelförderer mit gesteuerter Positionsüberwachung.

Auch aus der DE 197 56 798 A1 geht ein System zum Zuführen von Verbindungselementen zu einer Fügevorrichtung hervor. Eine Vereinzelungsvorrichtung eines Fügeroboters umfasst ein Reservoir für Verbindungselemente, aus dem ein Werkzeug des Roboters mit den Verbindungselementen versorgt wird.

Die DE 20 2016 103 143 U1 offenbart eine Fügeeinheit und Fügeeinrichtung. Die Fügeeinrichtung umfasst einen Roboterarm mit einem Fügewerkzeug und weist eine Lenkeinrichtung und eine Orientierungseinrichtung sowie eine Aufnahmeeinrichtung für über eine Leitung zugeführte Fügeelemente auf.

Aus der DE 100 64 241 A1 ist eine Nietzuführungsvorrichtung, insbesondere für eine Stanznietzange, mit einem rohrförmigen Magazin zur Aufnahme von Nieten und einer mit dem Magazin zusammenwirkenden Einrichtung zur Nietvereinzelung und Nietübergabe an eine Nietvorrichtung bekannt. Die Einrichtung zur Nietvereinzelung und Nietübergabe weist einen Schieber mit einer Nietaufnahmeöffnung auf, der quer zur Haupterstreckung des Magazins zwischen einer ersten Position zur Aufnahme eines Niets aus dem Magazin und einer zweiten Position zur Abgabe des aufgenommenen Niets hin und her verschiebbar ist.

Die EP 1 036 754 B1 beschreibt eine Vorrichtung zum kontinuierlichen Zuführen von Korken. Die Korken werden von zwei koplanaren Rädern transportiert, die einen Durchgangskanal für die Korken bilden. Beide Räder werden mittels Zahnriemen gedreht, die an entsprechenden Riemenscheiben mit Schwenkhebeln angebracht sind. Ein Getriebemotor, der über einen Zahnriemen mit einer der Riemenscheiben an den Schwenkhebeln verbunden ist, treibt die Räder an.

Die Vereinzelungsmodule werden üblicherweise manuell über eine an einem Scharnier befestigte Öffnungsklappe mit manueller Verriegelung befüllt. Diese Art des Verschlusses ist für den Einsatz auf einem Roboter unpraktisch, weil die Befüllung des Vereinzelungsmoduls manuell erfolgen muss. Dazu muss man den Roboterschutzkreis betreten und verursacht einen Anlagenstopp, der unerwünscht ist. Weiterhin kann die Erreichbarkeit des Vereinzelungsmoduls am Roboter zum Befüllen für die Mitarbeiter eine Herausforderung sein, die nur mit Zusatzmaßnahmen (und somit Zusatzkosten) zu erreichen ist.

Vor diesem Hintergrund hat sich die vorliegende Erfindung die Aufgabe gestellt, eine an einem Fügeroboter angeordnete Vorrichtung zur Bevorratung und Vereinzelung von Fügeelementen zur Verfügung zu stellen, die kompakt ist, einfach befüllt werden kann und ein Herausfallen der Fügeelemente verhindert. Außerdem soll ein Verfahren zum Betreiben der Vorrichtung bereitgestellt werden.

Die Aufgabe wird erfindungsgemäß gelöst durch eine Vorrichtung mit den Merkmalen des Anspruchs 1 und ein Verfahren mit den Merkmalen des Anspruchs 9. Ausgestaltungen und Weiterbildungen der Erfindung ergeben sich aus den abhängigen Ansprüchen.

Gegenstand der Erfindung ist eine an einem Fügeroboter angeordnete Vorrichtung zur Bevorratung und Vereinzelung von Fügeelementen, umfassend mindestens ein Vereinzelungsmodul mit einem Vorratsbehälter für Fügeelemente und eine Vereinzelungsvorrichtung für im Vorratsbehälter befindliche Fügeelemente, wobei der Vorratsbehälter eine Einfüllöffnung für Fügeelemente aufweist, die über eine Klappe verschließbar ist, wobei die Klappe von einem automatischen Antrieb betätigt wird, der über einen Signalaustausch mit dem Füllstand der Vorrichtung und einer Abfrage der Position des Fügeroboters verknüpft ist.

Die erfindungsgemäße Vorrichtung ("Kompaktvereinzeler") zur Bevorratung und Vereinzelung von Fügeelementen, insbesondere Halbhohlstanznieten, ist am Fügeroboter montiert. Das hat den Vorteil, dass kurze Zuführschläuche eingesetzt werden können, die die Roboterbewegung über alle Achsen nicht mitmachen müssen. Diese können dann wesentlich kürzer sein als die bei stationären Einheiten erforderlichen 20 m, und beispielsweise eine Länge von weniger als 10 m, insbesondere weniger als 5 m aufweisen. In einer Ausführungsform beträgt die Länge des Zuführschlauchs maximal 3 m, beispielsweise 2 bis 3 m. Es spart Zuführzeit und Druckluftenergie, weil das Fügeelement nur noch einen kurzen Weg zum Verbauort hat und es spart Wartungskosten, weil der Zuführschlauch ein Verschleißteil ist und somit der Aufwand zum Wechseln reduziert werden kann.

Um Nachteile für diese Arbeit der Teilebereitstellung zu vermeiden, wird eine automatische Klappenöffnung eingesetzt, d. h. die Einfüllöffnung für Fügeelemente an dem Vorratsbehälter der erfindungsgemäßen Vorrichtung ist über eine von einem automatischen Antrieb betätigte Klappe verschließbar. In einer bevorzugten Ausführungsform der Vorrichtung ist der automatische Antrieb ein elektrischer Antrieb. In einer anderen bevorzugten Ausführungsform ist der automatische Antrieb ein pneumatischer Antrieb. In einer speziellen vorteilhaften ist der Klappenantrieb druckluftgesteuert und die Position der Klappe kann abgefragt werden.

In einer bevorzugten Ausführungsform ist ein pneumatischer oder elektrischer Antrieb über einen Umlenkhebel mit einer Verschlussklappe kombiniert. Der Antrieb ist erfindungsgemäß über einen Signalaustausch mit dem Füllstand der Anlage und einer Abfrage der Roboterposition verknüpft.

Der Vorratsbehälter des Kompaktvereinzelers, der am Roboter selbst angeordnet ist, ist durch eine automatische Klappenöffnung verschließbar. Der Vorteil ist, dass bei der Bewegung des Roboters keine Niete aus der Öffnung zur Befüllung der Niete herausfallen können und der Kompaktvereinzeler selbst automatisch befüllt werden kann. Konkret bedeutet dies in einer bevorzugten Variante, dass über einen Umlenkhebel ein pneumatischer oder elektrischer Antrieb mit einer Verschlussklappe kombiniert wird, der über einen Signalaustausch mit dem Füllstand der Anlage und einer Abfrage der Roboterposition verknüpft ist.

Die Betankung des Systems lässt sich somit automatisieren. Es muss kein Mitarbeiter in den Sicherheitsbereich des Roboters eindringen, d. h. die effektive Anlagenverfügbarkeit ist dann höher und es kann eine höhere Ausbringung erzielt werden. Zudem werden die Kosten für eine manuelle Tätigkeit des Befüllvorgangs eingespart.

Das mindestens eine Vereinzelungsmodul der erfindungsgemäßen Vorrichtung umfasst eine Vereinzelungsvorrichtung für im Vorratsbehälter befindliche Fügeelemente. Beispiele geeigneter Vereinzelungsvorrichtungen umfassen Trommelvereinzeler und Linearförderer. Vorzugsweise ist die Vereinzelungsvorrichtung ein Trommelvereinzeler.

Um die Fügeelemente von einem ungeordneten Zustand in einen geordneten Zustand zu bringen, haben sich besonders Trommelvereinzeler als vorteilhaft erwiesen. Dabei wird die Trommel dazu benutzt, um die Fügeelemente in Bewegung zu bringen und an einer Austrittstrecke aufreihen zu können. Zur Drehung der Trommel wird ein beliebiger Antrieb verwendet, meistens aber ein elektrischer Antriebsmotor. Die Trommelvereinzeler haben den Nachteil, dass sie aufgrund des Gewichts und der Baugröße nur für Anwendungen im stationären Bereich geeignet sind. Besonders die Baulänge in der Tiefe ist für den Betrieb am Roboter ein Störfaktor, weil damit die Zugänglichkeit zu Fügebauteilen eingeschränkt werden kann.

Um Vereinzelungsmodule zur Verarbeitung von Fügeelementen, insbesondere Halbhohlstanznieten, am Roboter einsetzen zu können, ist der Bedarf an Bauraum möglichst niedrig zu halten. Um das realisieren zu können, ist es wichtig, eine kompakte Lösung des Trommelantriebs zu entwickeln. Dazu wird in einer Ausführungsform der erfindungsgemäßen Vorrichtung ein elektrischer Antrieb mit Getriebemotor eingesetzt, der kurz baut und über einen Zahnriemenantrieb mit zusätzlicher Übersetzung den Bauraum ideal nutzt. Der Vorteil ist die kompakte Bauweise verbunden mit einer maximal hohen Übersetzung zur Reduzierung der Drehgeschwindigkeit und Erhöhung des Drehmoments. Zur Zuführung der einzelnen Niete wird jeweils ein Getriebe im Bereich des Trommelvereinzelers verwendet, durch den der jeweilige Niet der Ausgabeeinheit zugeführt wird.

In einer speziellen vorteilhaften Ausführungsform wird der Trommelvereinzeler von einem elektrischen Antrieb mit Getriebemotor über einen Zahnriemen und zwei Zahnräder angetrieben. Der elektrische Antrieb mit Getriebemotor baut kurz und nutzt über einen Zahnriemenantrieb und zwei Zahnräder mit zusätzlicher Übersetzung den Bauraum im Bereich des Trommelvereinzelers ideal, was eine besonders kompakte Variante des Trommelantriebs darstellt.

In einer bevorzugten Ausführungsform wird ein Getriebemotor mit einer Übersetzung von größer 1:1, insbesondere größer 10:1 oder sogar größer 50:1 eingesetzt. Durch die Zahnräder wird die Übersetzung des Gesamtsystems erhöht und beträgt ein Vielfaches der Übersetzung des Getriebemotors, beispielsweise das 2- bis 3-fache der Übersetzung des Getriebemotors. Eine solche Einheit kann handelsüblich bei Spezialanbietern erworben werden. In einer weiteren bevorzugten Ausführungsform weist der elektrische Antrieb zusätzlich eine Kupplung auf. Eine zusätzliche Kupplung wird in dieser Anordnung ergänzend eingesetzt, um eine Beschädigung des Antriebs im Störfall zu unterbinden. Alternativ oder ergänzend ist der Einsatz eines Initiators sinnvoll, der die Drehbewegung der Trommel überwacht und mit dem Motorstrom vergleicht.

In einer vorteilhaften Ausführungsform umfasst die erfindungsgemäße Vorrichtung mindestens zwei Vereinzelungsmodule. Es lassen sich so unterschiedliche Arten von Fügeelementen in einer einzigen Vorrichtung verarbeiten, beispielsweise Niete unterschiedlicher Geometrien, z. B. unterschiedlicher Längen von z. B. 2,5 bis 14 mm, beispielsweise 3,5 bis 8 mm.

Die erfindungsgemäße Vorrichtung zeichnet sich durch ihre kompakte Bauweise aus, die eine Montage an einem Fügeroboter ermöglicht. In einer bevorzugten Ausführungsform beträgt die Breite der Vorrichtung maximal 320 mm; ihre Höhe beträgt maximal 480 mm; und ihre Tiefe maximal 230 mm. In einer vorteilhaften Ausführungsform beträgt das Gewicht der Vorrichtung weniger als 16 kg, z. B. weniger als 14 kg in befülltem Zustand. In einer anderen bevorzugten Ausführungsform, welche zwei Vereinzelungsmodule aufweist, beträgt das Gewicht der Vorrichtung weniger als 32 kg, z. B. weniger als 30 kg in befülltem Zustand. Die maximale Füllmenge des Vorratsbehälters beträgt in einer bevorzugten Ausführungsform von 2.000 bis 10.000 Fügeelemente, abhängig von der Größe der eingesetzten Fügeelemente.

Vorzugsweise ist die Vorrichtung schwimmend am Fügeroboter gelagert. Der Kompaktvereinzeler kann so seine Position halten, obwohl sich die Position des Fügeroboters verändert.

Gegenstand der Erfindung ist auch ein Verfahren zum Betreiben einer erfindungsgemäßen Vorrichtung. Dabei fährt der Fügeroboter in eine Betankungsposition, anschließend wird die Klappe der Einfüllöffnung von dem automatischen Antrieb betätigt, um die Einfüllöffnung für Fügeelemente freizugeben, der Vorratsbehälter wird über die Einfüllöffnung mit Fügeelementen befüllt, und nach Beendigung der Befüllung wird die Klappe von dem automatischen Antrieb betätigt, um die Einfüllöffnung zu verschließen.

In einer vorteilhaften Ausführungsform des Verfahrens fährt der Fügeroboter in die Betankungsposition, wenn der Füllstand im Vorratsbehälter einen vorgegebenen Wert unterschreitet.

Erfindungsgemäß ist der Antrieb der Verschlussklappe über einen Signalaustausch mit dem Füllstand der Vorrichtung und einer Abfrage der Roboterposition verknüpft. Das heißt, wenn beispielsweise der Füllstand zu gering ist, kommt das Signal "bitte Tanken" über einen handelsüblichen Initiator (z. B. induktiv) und der Roboter fährt in eine Betankungsposition bei der die Betankungsklappe geöffnet wird und der Betankungsprozess starten kann. Nach Beendigung des Betankungsprozesses schließt die automatische Klappenöffnung wieder und der Roboter kann mit dem Vereinzelungsmodul in alle möglichen Positionen fahren, ohne einen Teileverlust zu riskieren.

Weitere Vorteile und Ausgestaltungen der Erfindung ergeben sich aus der Beschreibung und den beiliegenden Zeichnungen.

Die Erfindung ist anhand von Ausführungsformen in den Zeichnungen schematisch dargestellt und wird unter Bezugnahme auf die Zeichnungen schematisch und ausführlich beschrieben. Es zeigt:
Figur 1 eine schematische perspektivische Darstellung einer Ausführungsform des erfindungsgemäßen Kompaktvereinzelers;
Figur 2 eine andere schematische perspektivische Darstellung der Ausführungsform aus Figur 1;
Figur 3 eine schematische perspektivische Darstellung einer weiteren Ausführungsform des erfindungsgemäßen Kompaktvereinzelers.

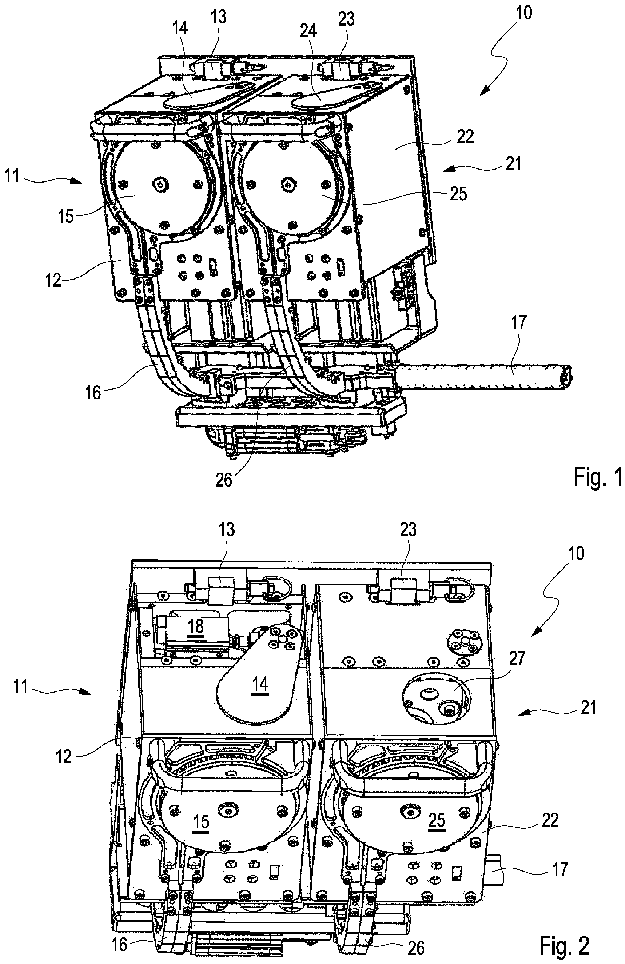

Figur 1 zeigt in perspektivischer Darstellung schematisch eine Ausführungsform des erfindungsgemäßen Kompaktvereinzelers 10 mit zwei Vereinzelungsmodulen 11 und 21. Die Vereinzelungsmodule 11 und 21 sind über Aufhängungen 13 und 23 an einer Basisplatte arretiert. Jedes Vereinzelungsmodul 11 bzw. 21 weist einen Vorratsbehälter 12 bzw. 22 für Fügeelemente auf. Die Einfüllöffnungen der Vorratsbehälter 12 und 22 sind über Klappen 14 bzw. 24 verschlossen und daher in der Zeichnung nicht sichtbar. Die in den Vorratsbehältern 12 bzw. 22 befindlichen Fügeelemente, z. B. Hohlstanzniete, werden über Trommelvereinzeler 15 bzw. 25 sortiert und in einer Pufferstrecke 16 bzw. 26 aufgereiht und einem Zuführschlauch 17 zugeführt, über den sie mittels Druckluft zu dem Fügewerkzeug des Fügeroboters transportiert werden.

Figur 2 zeigt dieselbe Ausführungsform des erfindungsgemäßen Kompaktvereinzelers 10 mit zwei Vereinzelungsmodulen 11 und 21 wie Figur 1, jedoch schräg von oben. Zur Veranschaulichung ist bei Vereinzelungsmodul 11 ein Teil der Deckelplatte entfernt, so dass der automatische Antrieb 18 der Verschlussklappe 14 sichtbar ist. Bei Vereinzelungsmodul 21 ist die Verschlussklappe 24 nicht dargestellt, so dass die Einfüllöffnung 27 des Vorratsbehälters 22 sichtbar ist.

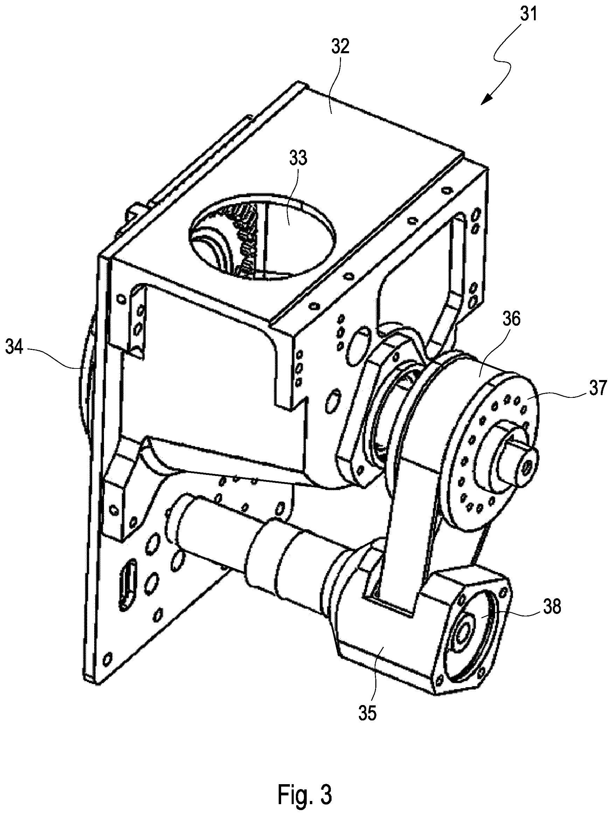

Figur 3 zeigt in perspektivischer Darstellung schematisch eine weitere Ausführungsform des erfindungsgemäßen Kompaktvereinzelers. Dargestellt ist ein Vereinzelungsmodul 31 mit einem Vorratsbehälter 32, der eine Einfüllöffnung 33 für Fügeelemente aufweist. Der Übersichtlichkeit halber ist die automatische Verschlussklappe, die die Öffnung 33 während des Fügebetriebs verschließt, nicht dargestellt. Das Vereinzelungsmodul 31 weist einen Trommelvereinzeler 34 mit besonders kompakter Bauform auf. Der Trommelvereinzeler 34 wird von einem elektrischen Antrieb mit Getriebemotor 35 über einen Zahnriemen 36 und zwei Zahnräder 37 und 38 angetrieben.

### Bezugszeichenliste

- 10: Kompaktvereinzeler
- 11: Vereinzelungsmodul
- 12: Vorratsbehälter
- 13: Aufhängung
- 14: Klappe
- 15: Trommelvereinzeler
- 16: Pufferstrecke
- 17: Zuführschlauch
- 18: Klappenantrieb
- 21: Vereinzelungsmodul
- 22: Vorratsbehälter
- 23: Aufhängung
- 24: Klappe
- 25: Trommelvereinzeler
- 26: Pufferstrecke
- 27: Einfüllöffnung
- 31: Vereinzelungsmodul
- 32: Vorratsbehälter
- 33: Einfüllöffnung
- 34: Trommelvereinzeler
- 35: Getriebemotor
- 36: Zahnriemen
- 37: Zahnrad
- 38: Zahnrad

## Patentansprüche

1. An einem Fügeroboter angeordnete Vorrichtung (10) zur Bevorratung und Vereinzelung von Fügeelementen, umfassend mindestens ein Vereinzelungsmodul (11, 21, 31) mit einem Vorratsbehälter (12, 22, 32) für Fügeelemente und eine Vereinzelungsvorrichtung (15, 25, 34) für im Vorratsbehälter (12, 22, 32) befindliche Fügeelemente, wobei der Vorratsbehälter (12, 22, 32) eine Einfüllöffnung (27, 33) für Fügeelemente aufweist, die über eine Klappe (14, 24) verschließbar ist, **dadurch gekennzeichnet, dass** die Klappe (14, 24) von einem automatischen Antrieb (18) betätigt wird, der über einen Signalaustausch mit dem Füllstand der Vorrichtung (10) und einer Abfrage der Position des Fügeroboters verknüpft ist.

2. Vorrichtung (10) nach Anspruch 1, worin der automatische Antrieb (18) ein elektrischer Antrieb ist.

3. Vorrichtung (10) nach Anspruch 1, worin der automatische Antrieb (18) ein pneumatischer Antrieb ist.

4. Vorrichtung (10) nach einem der Ansprüche 1 bis 3, worin die Vereinzelungsvorrichtung (15, 25, 34) ein Trommelvereinzeler (15, 25, 34) ist.

5. Vorrichtung (10) nach Anspruch 4, worin der Trommelvereinzeler (15, 25, 34) von einem elektrischen Antrieb mit Getriebemotor (35) über einen Zahnriemen (36) und zwei Zahnräder (37) angetrieben wird.

6. Vorrichtung nach Anspruch 5, worin die Übersetzung des Getriebemotors größer als 1:1 ist.

7. Vorrichtung nach Anspruch 5 oder 6, worin der elektrische Antrieb zusätzlich eine Kupplung aufweist.

8. Vorrichtung nach einem der voranstehenden Ansprüche, welche mindestens zwei Vereinzelungsmodule (11, 21, 31) umfasst.

9. Verfahren zum Betreiben einer Vorrichtung nach einem der voranstehenden Ansprüche, worin der Fügeroboter in eine Betankungsposition fährt, anschließend die Klappe (14, 24) von dem automatischen Antrieb (18), der über einen Signalaustausch mit einer Abfrage der Roboterposition verknüpft ist, betätigt wird, um die Einfüllöffnung (27, 33) für Fügeelemente freizugeben, der Vorratsbehälter (12, 22, 32) über die Einfüllöffnung (27, 33) mit Fügeelementen befüllt wird, und die Klappe (14, 24) von dem automatischen Antrieb (18), der über einen Signalaustausch mit dem Füllstand der Vorrichtung (10) verknüpft ist, nach Beendigung der Befüllung betätigt wird, um die Einfüllöffnung (27, 33) zu verschließen.

10. Verfahren nach Anspruch 9, worin der Fügeroboter in die Betankungsposition fährt, wenn der Füllstand im Vorratsbehälter (12, 22, 32) einen vorgegebenen Wert unterschreitet.

## Claims

1. Device (10) arranged on a joining robot for storing and separating joining elements, comprising at least one separating module (11, 21, 31) with a reservoir (12, 22, 32) for joining elements and a separating device (15, 25, 34) for joining elements located in the reservoir (12, 22, 32), the reservoir (12, 22, 32) having a filling opening (27, 33) for joining elements that can be closed by means of a flap (14, 24), **characterised in that** the flap (14, 24) is actuated by an automatic drive (18), which is linked via a signal exchange to the filling level of the device (10) and to an interrogation of the position of the joining robot.

2. Device (10) according to claim 1, wherein the automatic drive (18) is an electric drive.

3. Device (10) according to claim 1, wherein the automatic drive (18) is a pneumatic drive.

4. Device (10) according to any one of claims 1 to 3, wherein the separating device (15, 25, 34) is a drum separator (15, 25, 34).

5. Device (10) according to claim 4, wherein the drum separator (15, 25, 34) is driven by an electric drive with gear motor (35) via a toothed belt (36) and two toothed wheels (37).

6. Device according to claim 5, wherein the gear ratio of the gear motor is greater than 1:1.

7. Device according to claim 5 or 6, wherein the electric drive additionally comprises a clutch.

8. Device according to any one of the preceding claims, which comprises at least two separation modules (11, 21, 31).

9. Method for operating a device according to any one of the preceding claims, wherein the joining robot moves into a filling position, then the flap (14, 24) is actuated by the automatic drive (18), which is linked via a signal exchange to an interrogation of the robot position, in order to uncover the filling opening (27, 33) for joining elements, the reservoir (12, 22, 32) is filled with joining elements via the filling opening (27, 33), and the flap (14, 24) is actuated after completion of the filling by the automatic drive (18), which is linked via a signal exchange to the filling level of the device (10), in order to close the filling opening (27, 33).

10. Method according to claim 9, wherein the joining robot moves to the filling position when the filling level in the reservoir (12, 22, 32) falls below a specified value.

## Revendications

1. Dispositif agencé au niveau d'un robot d'assemblage (10) pour le stockage et la séparation d'éléments d'assemblage, comprenant au moins un module de séparation (11, 21, 31) avec un réservoir (12, 22, 32) pour des éléments d'assemblage et un dispositif de séparation (15, 25, 34) pour des éléments d'assemblage se trouvant dans le réservoir (12, 22, 32), dans lequel le réservoir (12, 22, 32) présente une ouverture de remplissage (27, 33) pour des éléments d'assemblage, qui peut être fermée par le biais d'un volet (14, 24), **caractérisé en ce que** le volet (14, 24) est actionné par un entraînement (18) automatique qui est relié par le biais d'un échange de signaux au niveau de remplissage du dispositif (10) et d'une interrogation de la position du robot d'assemblage.

2. Dispositif (10) selon la revendication 1, dans lequel l'entraînement (18) automatique est un entraînement électrique.

3. Dispositif (10) selon la revendication 1, dans lequel l'entraînement (18) automatique est un entraînement pneumatique.

4. Dispositif (10) selon l'une quelconque des revendications 1 à 3, dans lequel le dispositif de séparation (15, 25, 34) est un dispositif de séparation à tambour (15, 25, 34).

5. Dispositif (10) selon la revendication 4, dans lequel le dispositif de séparation à tambour (15, 25, 34) est entraîné par un entraînement électrique avec un moto-réducteur (35) par le biais d'une courroie dentée (36) et de deux roues dentées (37).

6. Dispositif selon la revendication 5, dans lequel la transmission du moto-réducteur est supérieure à 1:1.

7. Dispositif selon la revendication 5 ou 6, dans lequel l'entraînement électrique présente en outre un embrayage.

8. Dispositif selon l'une quelconque des revendications précédentes, qui comporte au moins deux modules de séparation (11, 21, 31).

9. Procédé de fonctionnement d'un dispositif selon l'une quelconque des revendications précédentes, dans lequel le robot d'assemblage se déplace dans une position de ravitaillement, puis le volet (14, 24) est actionné par l'entraînement (18) automatique qui est relié par le biais d'un échange de signaux à une interrogation de la position de robot afin de libérer l'ouverture de remplissage (27, 33) pour des éléments d'assemblage, le réservoir (12, 22, 32) est rempli par le biais de l'ouverture de remplissage (27, 33) d'éléments d'assemblage, et le volet (14, 24) est actionné par l'entraînement (18) automatique qui est relié par le biais d'un échange de signaux au niveau de remplissage du dispositif (10), à la fin du remplissage afin de fermer l'ouverture de remplissage (27, 33).

10. Procédé selon la revendication 9, dans lequel le robot d'assemblage se déplace dans la position de ravitaillement lorsque le niveau de remplissage dans le réservoir (12, 22, 32) reste en dessous d'une valeur prédéfinie.
